# EUROPEAN PATENT APPLICATION

(11) **EP 1 215 898 A2**
(43) Date of publication of application: **19.06.2002**
(21) Application number: 01310534.1
(22) Date of filing: 17.12.2001
(51) Int. Cl.: H04N 5/445, H04H 1/00, G06F 9/00, G06F 17/30, H04L 12/14, H04N 7/16

(54) **Providing broadcast information contents associated with time-specific information to a user terminal through networks**

(30) Priority: 18.12.2000 JP 2000383749
(71) Applicant: NIPPON HOSO KYOKAI, Tokyo 150-8001 (JP)
(72) Inventor: Nakagawa, Toshio,c/o NHK Science & Tech. Res. Lab., Setagaya-ku, Tokyo 157-8510 (JP); Aoki, Katsunori, c/o NHK Science & Tech. Res. Lab., Setagaya-ku, Tokyo 157-8510 (JP); Fujisawa, Toshiyuki, c/o NHK Broadcasting Center, Shibuya-ku, Tokyo 150-8001 (JP); Izumi, Yoshinori, c/o NHK Science & Tech. Res. Lab, Setagaya-ku, Tokyo 157-8510 (JP)
(74) Representative: Luckhurst, Anthony Henry William

(57) **Abstract**

A system includes a content information database (2) which stores therein content information (D4) about contents associated with broadcast programs on a channel-and-time-specific basis that corresponds to a channel and a time of each broadcast program, the content information including at least one of content guide information descriptive of the contents and content location information indicative of locations of the contents on a network. The system further includes a content selecting unit (3) which searches in the content information database for the content information of a specific channel and a specific time in response to a request (D2) from a user terminal (4) indicating at least one of the specific channel and the specific time in a direct or indirect manner, and provides the content information (D5) of the specific channel and the specific time to the user terminal (4).

## Description

### BACKGROUND OF THE INVENTION

### 1. Field of the Invention

The present invention generally relates to methods and systems for delivering contents to users, and particularly relates to a method and a system for providing users with contents that are associated with time-specific events or time-specific information such as broadcast information.

### 2. Description of the Related Art

There is a need to provide users with data contents such as program information or advertisements associated with time-specific events or time-specific information such as broadcast information that are provided at specified hours. For this purpose, a data broadcast means or a network means such as the Internet may be used.

The data broadcast means provides contents by transmitting digital data from a broadcast station that are superimposed on part of the ordinary television signals or radio signals. Users obtain the contents by using a television set or a radio receiver that is provided with a function to receive data broadcast.

In the network means using a network such as the Internet, data contents are prepared as files having a Web-page format such as the HTML (Hyper Text Markup Language) format. A Web server that stores these files therein is connected to a network and provides the data contents.

Using a terminal such as a personal computer connected to the network, a user can use browser software to look through and access the contents provided by the Web server. In the content delivery method based on the Web-page format, content pages have links from other pages on the network, so that users can access the content pages by following the hyperlinks from the other pages.

The data broadcast method is advantageous in terms of the easy and straightforward provision of contents associated with broadcast programs in a time-specific manner. Since special equipment conforming to the data broadcast is necessary on the transmission side and on the reception side, however, costs associated with such equipment are major concerns that prevent an increase in the numbers of data-content providers and users.

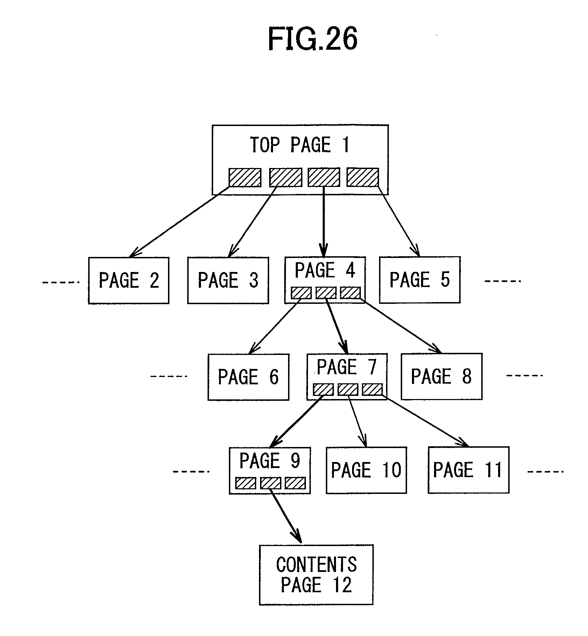

In the network means using a network such as the Internet, access can be made to the content pages by following hyperlinks from other pages. As shown in Fig.26, generally, users need to start from a top page (page 1) that is of frequent use, followed by selecting proper hyperlinks one after another as many times as necessary.

In the example of Fig.26, in order to access content page 12, a path needs to be taken from top page 1, to page 4, page 7, page 9, and page 12. The greater the manual labor for selecting hyperlinks, the fewer the number of users and the frequency of use of contents are.

In order to attain increased use of contents, the content provider needs to place a hyperlink to the content pages at a better position such as a page that is close to a page accessed by many users, i.e., close to the top page. The larger the number of users visiting a given page, the higher the demand for hyperlinks on such a page is. This is the case even among the content providers. Because of this, there are increasing costs for placing the hyperlinks.

Further, when hyperlinks to a large number of content pages different for different hours are to be placed on a page accessed by many users, expenses will undesirably increase in proportion to the number of content pages.

If a larger number of hyperlinks are listed on one page, users are inundated by a large number of choices to make. It may thus be difficult to find a hyperlink to desired contents.

There are methods to access content pages without using hyperlinks. Such methods include a method of indicating a URL (Uniform Resource Locator) that is an indicator of a location of data contents, by which a user directly enters a URL into a browser for accessing the contents. Another one of such methods is to enter into the browser a non-URL identifier such as an Internet number indicative of a page, and the network service will inform the browser of the location of the page. It is cumbersome, however, for a user to enter a URL or other identifiers into the browser by using an input means such as a keyboard.

In the related-art methods based on the network means, as described above, users must endure cumbersome manual labor when accessing the desired data contents, so that those related-art methods are not proper as an access means for accessing contents that vary depending on hours. This prevents the number of content users from growing.

### SUMMARY OF THE INVENTION

It is a general object of the present invention to provide a method and a system that substantially obviate one or more of the problems caused by the limitations and disadvantages of the related art.

It is another and more specific object of the present invention to provide a method and a system for providing contents that allow users to promptly access contents through user terminals when these contents are provided through a network and are associated with time-specific events or time-specific information such as broadcast information.

In order to achieve the above objectives, a system according to the present invention includes a content information database which stores therein content information about contents associated with broadcast programs on a channel-and-time-specific basis that corresponds to a channel and a time of each broadcast program, the content information including at least one of content guide information descriptive of the contents and content location information indicative of locations of the contents on a network. The system further includes a content selecting unit which searches in the content information database for the content information of a specific channel and a specific time in response to a request from a user terminal indicating at least one of the specific channel and the specific time in a direct or indirect manner, and provides the content information of the specific channel and the specific time to the user terminal.

In the present invention as described above, the contents associated with existing information providing media or events on a time-specific manner are provided in Web servers or the like on a network such as the Internet, thereby implementing the content information database on the network such that an indication of a channel and a time leads to information about the location of contents. This content information database stores therein the content location information and the content guide information to be presented to users as assisting information that may help a user to select contents when the user selects a specific channel between hours from a specific starting time to a specific ending time.

In addition, the present invention provides the user terminal with a content-selection user interface dedicated for the purpose of allowing the user to use the content information database with ease. When using a television set, viewers can easily select broadcast programs by selecting channels by use of a channel-selection device. By the same token, the content-selection user interface of the present invention has buttons thereon for selecting channels corresponding to the broadcast channels. This user interface may be further provided with a button for selecting a time, which makes it possible to have a time setting not only for a present instant but also for the past or the future. Namely, a user can obtain not only contents of a present instant but also contents of the past or the future through relatively easy operations.

Moreover, the present invention described above includes the content selecting unit for searching in the content information database in response to a request from the content-selection user interface.

Selection of a channel by pressing one of the buttons on the content-selection user interface is reported to the content selecting unit through the user terminal. In response, the content selecting unit extracts the content location information of the contents of the selected channel at the present instant from the content information database, and sends the extracted information to the user terminal. Receiving this information, the user terminal learns the location of the requested contents, and automatically obtains the contents for subsequent presentation to the user.

In the related art, when a network provides contents associated with time-specific information or events such as broadcast information, users need to find a desired content by looking through a large number of contents available on the network, or need to follow hyperlinks as many times as necessary. With such cumbersome manual labor, users may not be able to access contents during broadcast hours, event hours, or on time immediately after the end of broadcasting or events. This and other factors such as the time consuming nature of such operations discourage the users from using the system.

The content providing scheme of the present invention, on the other hand, provides an access means that helps users to promptly access contents in the same manner as when selecting broadcast channels. This helps to increase the number of users and the frequency of use, thereby enhancing the effect of advertisement in the contents. In this manner, the present invention provides a useful means not only for content providers but also for those who seek a business that provides a content providing system as a new form of information media or advertisement media.

According to the present invention, a system for registering content information in the content information database is also provided. Further, a system for calculating registration fees is provided for the purpose of charging fees to customers (information providers) for registration of information contents.

Other objects and further features of the present invention will be apparent from the following detailed description when read in conjunction with the accompanying drawings.

### BRIEF DESCRIPTION OF THE DRAWINGS

Fig.1 is a block diagram of a content providing system that allows users to promptly access Web pages on which program information or advertisement associated with broadcast programs are provided;
Fig.2 is an illustrative drawing showing a content information registration space of a content information database;
Fig.3 is a block diagram of an example of a content-selection user interface;
Fig.4 is a flowchart of a process of providing contents to users;
Fig.5 is an illustrative drawing showing an example of screen display of a user terminal;
Fig.6 is an illustrative drawing showing an example of screen display of the user terminal;
Fig.7 is an illustrative drawing showing an example of screen display of the user terminal;
Fig.8 is an illustrative drawing showing an example of a design of a content-selection user interface;
Fig.9 is a block diagram of a content information registration system;
Fig.10 is an illustrative drawing showing a registration request space inside a content information registration request database;
Fig.11 is a flowchart of a process of requesting registration of content information;
Fig.12 is an illustrative drawing showing a screen display used for registration request;
Fig.13 is an illustrative drawing showing a screen display used for registration request;
Fig.14 is an illustrative drawing showing a screen display used for registration request;
Fig.15 is an illustrative drawing showing a screen display used for registration request;
Fig.16 is an illustrative drawing showing a page that is presented when user registration is denied;
Fig.17 is a flowchart of a process for registering content information in the content information database;
Fig.18 is an illustrative drawing showing an example of a displayed page for registering content information;
Fig.19 is an illustrative drawing showing an example of a displayed page for registering content information;
Fig.20 is an illustrative drawing showing an example of a displayed page for registering content information;
Fig.21 is an illustrative drawing showing an example of a displayed page for registering content information;
Fig.22 is an illustrative drawing showing an example of a displayed page for registering content information;
Fig.23 is an illustrative drawing showing an example of a displayed page for registering content information;
Fig.24 is an illustrative drawing showing an example of a displayed page for registering content information;
Fig.25 is a flowchart of a process of determining the amount of fees charged for content information registration; and
Fig.26 is an illustrative drawing for explaining a need to follow hyperlinks to reach a desired content.

### DESCRIPTION OF THE PREFERRED EMBODIMENTS

In the following, embodiments of the present invention will be described with reference to the accompanying drawings.

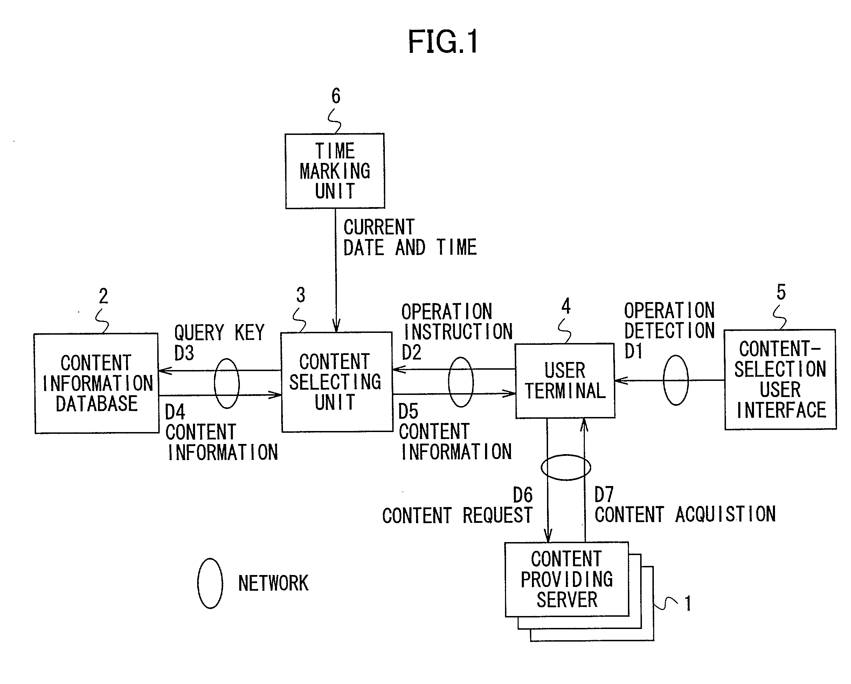

Fig.1 is a block diagram of a content providing system that allows users to promptly access Web pages on which program information or advertisements associated with broadcast programs are provided through the Internet.

In Fig.1, a content providing server 1 stores therein program information or advertisements (hereinafter referred to as "contents") that are to be provided to users. A user terminal 4 transmits a content request D6 to the content providing server 1 so as to obtain contents D7. The content providing server 1 is a Web server connected to the Internet.

Contents may be provided as Web pages, which are provided in different servers or different locations within the same server on a content-by-content basis. Locations where the contents are stored are described as content location information. If a generally accepted description such as the URL for indicating network resources is used as the content location information, an existing Web server can be used as the content providing server 1. In this embodiment, the URL is used as the content location information.

A content information database 2 provides content information to users, and is implemented by a computer system having ordinary database functions.

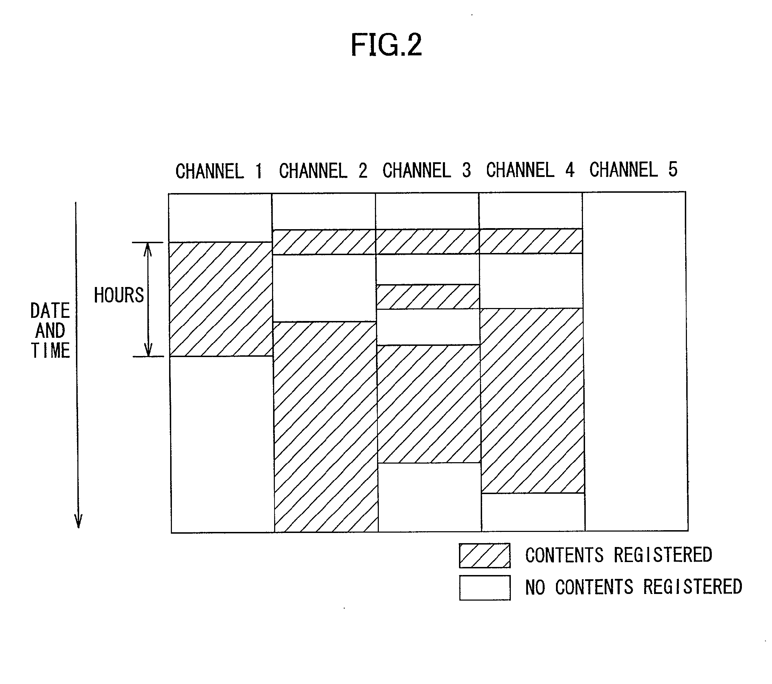

The content information database 2 stores therein information about contents that are provided to users at a particular hour on a particular channel where the channel defined as a broadcast channel and the hour defined as the start time and the end time of a broadcast program are provided as a pair as shown in Fig.2. Fig.2 is an illustrative drawing showing a content information registration space of the content information database 2. Details of this will be described later.

The content information includes content guide information and content location information. The content guide information is directed to users, and may include a title of content (e.g., a title of a program if the content corresponds to a broadcast program) and a brief description of the content. One of the content guide information and the content location information can be a blank.

The content information database 2 receives a "channel" and an "hour" from a content selecting unit 3 as a query key D3. Upon receiving the query key D3, the content information database 2 sends content information D4 to the content selecting unit 3 where the content information D4 has the "channel" of the query key D3 and hours inclusive of the "hour" of the query key D3. Further, the "channel" and "hour" of a query key sent from the content selecting unit 3 are kept in storage, and are reused when a next instruction is given by a relative indication. The content selecting unit 3 is provided with a time marking unit 6, which provides a current date and time.

The user terminal 4 is provided with functions comparable to ordinary personal computers connected to the Internet, and enables a user to look at and use the contents on the content providing server 1 through the browser display.

In this embodiment, the user terminal 4 includes a content-selection user interface 5, an information displaying apparatus such as a display, a network means that provides access to the Internet, and is implemented by using software that performs processes as will be described layer. The content-selection user interface 5 is a remote control apparatus that is dedicated hardware for using the content information database 2.

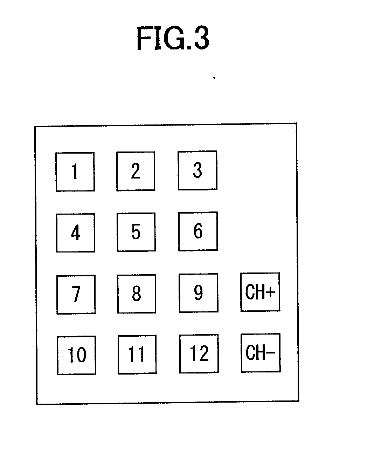

Fig.3 is a block diagram of an example of the content-selection user interface 5. As shown in Fig.3, the content-selection user interface 5 has buttons with numbers 1-12 thereon for selecting channels, a button with a "CH+" indication thereon for selecting a channel having a next increased channel number relative to channel of current selection, a button with a "CH-" mark thereon for selecting a channel having a next decreased channel number relative the channel of current selection. Such apparatus may be implemented as an infrared-light-based remote control apparatus.

In this embodiment, consideration is given to the fact that contents are provided in relation to channels of television broadcast, so that the buttons shown in Fig.3 are intended to imitate buttons provided on a remote controller of an ordinary television set. The content-selection user interface 5 informs the user terminal 4 of the button pressed by the user by transmitting an infrared pulse signal. This is shown as an operation detection D1.

As described above, the content-selection user interface 5 for using the system of this embodiment is configured to have the same functional design as a remote controller that is familiar to ordinary users. Because of this, users can select contents as if they were changing channels of the television set.

Instead of using an infrared remote controller, the content-selection user interface 5 may be implemented by providing the user terminal 4 with a dedicated keypad similar to the buttons of Fig.3. Alternatively, the content-selection user interface 5 may be implemented by displaying a virtual remote controller on screen by use of software in the user terminal 4.

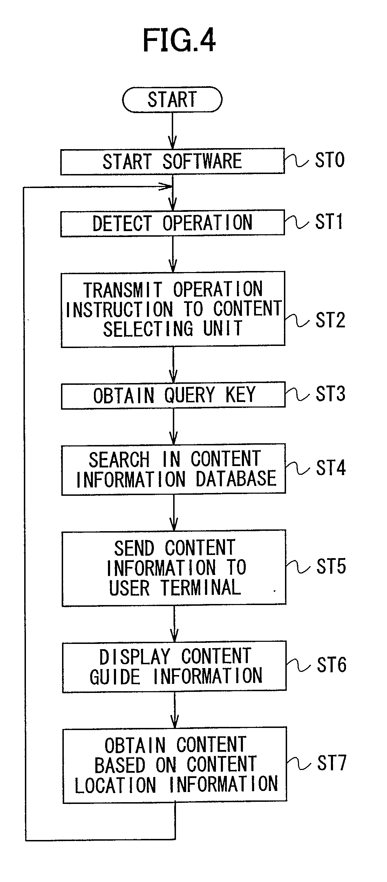

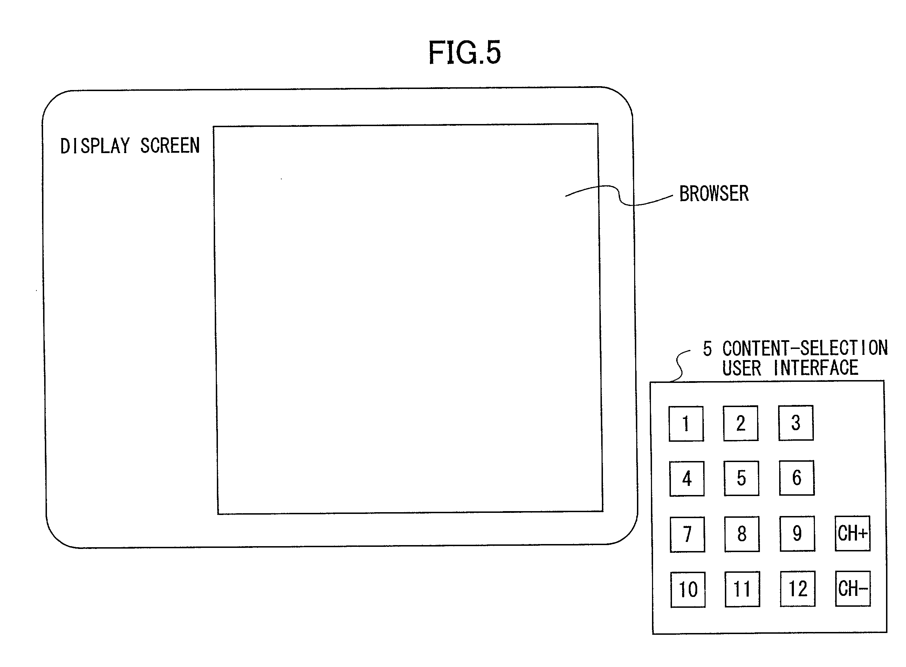

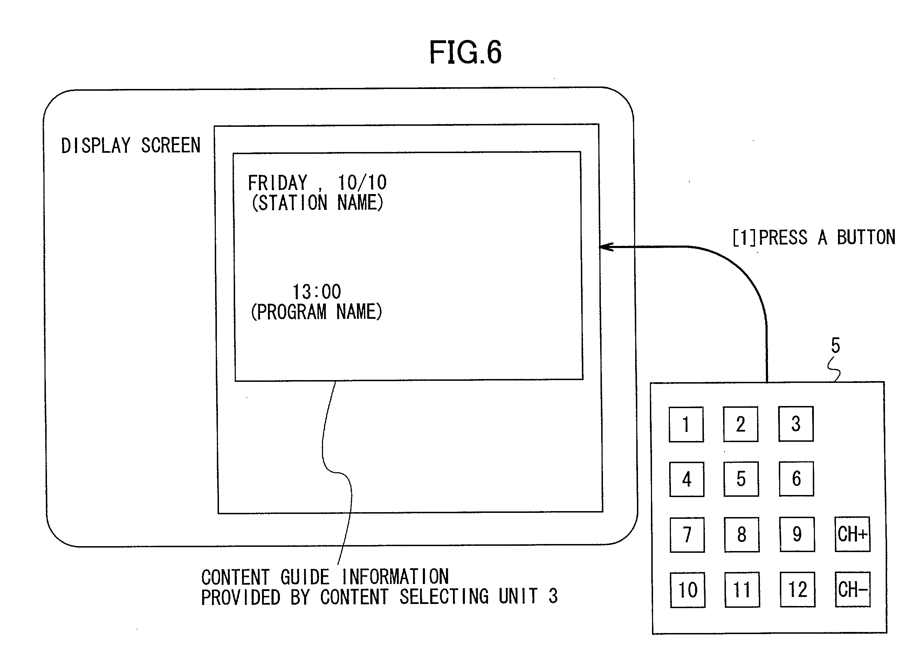

Operations of the content providing system will be described with reference to Fig.4 through Fig.7. Fig.4 is a flowchart of a process of providing contents to users. Fig.5 through Fig.7 are illustrative drawings showing examples of screen displays of the user terminal 4.

In the user terminal 4 for using the service of the content providing system of the present embodiment, dedicated software is activated first, thereby availing the content-selection user interface 5 to a user. In conjunction with this, a Web browser for displaying contents is activated as shown in an example of a terminal screen display of Fig.5 (step ST0).

Thereafter, the user presses a button of the content-selection user interface 5. The content-selection user interface 5 detects the pressing of the button, and transmits to the user terminal 4 an operation detection D1 inclusive of an identification of the pressed button (step ST1). When the user wishes to search for contents of program information associated with broadcast programs, for example, the user presses a button having a number corresponding to the channel of a desired broadcast station. Each time a button is pressed on the content-selection user interface 5, different contents are accessed.

The user terminal 4, for which the initial settings as described above are made, generates an operation instruction D2 based on the operation detection D1, and transmits the operation instruction D2 to the content selecting unit 3 via the network (step ST2). The content selecting unit 3 derives the query key D3 (step ST3) for searching in the content information database 2 from the received operation instruction D2, the channel of previous selection selected by the same user terminal, and a current date and time reported by the time marking unit 6.

The query key D3 is derived from the combination of channel information and date and time information. If the channel of previous selection is "1" among channels "1" through "12", and the current date and time is "10:00 a.m., October 10, 2000", for example, the content selecting unit 3 learns the selection of channel "1" in response to the pressing of button "1", and generates the query key D3 "Channel 1, Date and Time 10:00 a.m., October 10, 2000".

If the operation instruction D2 thereafter indicates the pressing of the button "CH+", the content selecting unit 3 learns that a channel number next following the previously selected channel number is selected, and generates the query key D3 "Channel 2, Date and Time 10:00 a.m., October 10, 2000".

In order to use the previously selected state such as the channel of previous selection, the previously selected state may be stored by cookie of the browser of the user terminal 4. Alternatively, the content selecting unit 3 stores therein the previously selected state on a terminal-specific basis by identifying the user terminal 4 based on its IP address or the like.

The content selecting unit 3 searches in the content information database 2 by using the query key D3, thereby obtaining the content information D4 (step ST4). The content selecting unit 3 sends the content information D4 as content information D5 to the user terminal 4 via the network (step ST5).

The user terminal 4 presents content guide information "Friday, October 10, (broadcast station name), 13:00 - (program name)", for example, to the user by means of the browser display (step ST6). Such content guide information is included in the received content information. If the button "CH+" is pressed, content guide information about the channel next following the previously selected channel will be displayed on the browser.

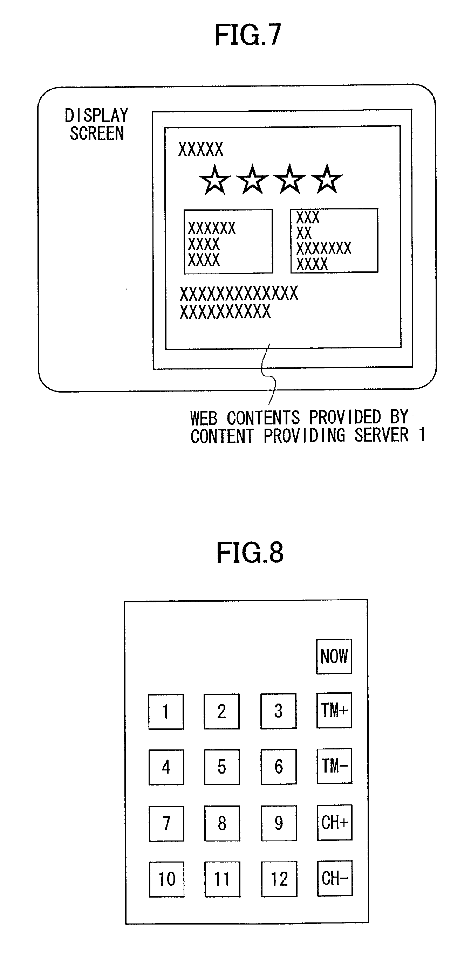

The user terminal 4 extracts content location information having the URL format from the content information, and generates a content request D6 based on the content location information. The content request D6 is then transmitted to the content providing server 1 on the network. From the content providing server 1, the user terminal 4 obtains Web contents located at the network location corresponding to the URL, which is shown as content acquisition D7. Upon obtaining the contents, the user terminal 4 presents the Web contents to the user as shown in Fig.7 (step ST7). If the user further presses a button on the content-selection user interface 5, step ST1 and the following steps will be repeated.

Each time the user operates the content-selection user interface 5, content location information is extracted from the content information database 2, followed by obtaining contents based on the extracted content location information.

The procedure of these steps described above may be readily implemented by inserting a Java-script program into the data series of the content guide information that is displayed by the browser at step ST6. Such program defines operations of the browser and an operation by which the display will be switched after a prescribed time period to the contents indicated by the URL of the content location information.

In the system of the present embodiment, contents of the same channel number as a requested number are provided at hours corresponding to the hours of associated broadcast programs when the contents such as program information about the broadcast programs are provided through the network. To this end, content location information is registered in the content information database 2. In order to obtain the contents of a broadcast program while the broadcast program is being aired, all that is necessary is simply press a button corresponding to the same channel number as the broadcast program on the content-selection user interface 5.

Such a channel selection operation is performed in the same manner and with the same feel as when a remote controller of a television set is operated. Thus, user interface is user friendly, and offers the capacity of high-speed content acquisition. As a result, the users can select contents lightheartedly with a little manual labor, which is expected to bring about an increase in the frequency of use of contents.

Although channels are represented by numbers in this example, broadcast station names or the like may alternatively be used as indications of channels. In such a case, a plurality of broadcast stations may be arranged in a predetermined order, so that the pressing of a button "CH+" or "CH-" can define a relative channel selection such as the next following broadcast station or the immediately preceding broadcast station.

Fig.8 is an illustrative drawing showing an example of a design of the content-selection user interface 5. As shown in Fig.8, the content-selection user interface 5 may be provided with buttons "NOW", "TM+", and "TM-" for selecting a date and time, in addition to the channel selection buttons shown in Fig.3. The unit of time selection may be set to thirty minutes, for example, and this additional interface function makes it possible to put forward or set backward the time setting of a selected date and time.

The button "NOW" is used to select the current date and time, and the button "TM+" is used to select a date and time that is advanced relative to the previously selected date and time by a predetermined time period such as thirty minutes set by the system. The button "TM-" is used to select a data and time that is set backward relative to the previously selected date and time by the predetermined time period.

When a button for date and time selection is pressed, the content selecting unit 3 obtains the query key D3 by determining a requested date and time based on the previously set date and time and the type of operation of time and date selection specified by the pressing of a button.

If the button "TM+" is pressed while the previous selection is "Channel 1, Date and Time 10:00 a.m., October 10, 2000", the resulting query key will be "Channel 1, Date and time 10:30 a.m., October 10, 2000". If the button "NOW" is pressed, the date and time portion of the query key is replaced by the current date and time obtained by the time marking unit 6 regardless of the previously selected date and time.

In the case of a system that provides contents corresponding to television broadcast programs, the content-selection user interface 5 having the time and date setting function makes it possible not only to select contents associated with the currently aired broadcast programs but also to select contents associated with previously aired programs or contents associated with programs that are to be aired at a later time. With this provision, the user can readily obtain network contents with regard to post-program information after the broadcasting of a particular program or pre-program information before the broadcasting of a particular program.

Accordingly, the system of this embodiment helps to increase the number of users accessing contents, which are associated with broadcasting and were not used by a large number of users because of cumbersome manual labor needed for accessing the contents.

In the following, a method of storing content information in the content information database 2 will be described with reference to Fig.2.

As previously described, the content information database 2 stores therein content information with respect to each pair of a channel and an hour that is defined as a time period from the starting date and time to the ending date and time. Fig.2 shows time slots corresponding to broadcast hours for which content information is registered on a channel-specific basis.

A space inside the content information database 2 that is defined by channels and hours are hereinafter referred to as a content information registration space. Information providers obtain a share of the content information registration space by submitting a request. In this manner, information providers obtain the right to register content information in the content information registration space.

As shown by hatched areas in Fig.2, sections are defined in the content information registration space of the content information database 2, and have respective content information registered therein. Using the content accessing means as previously described, a user specifies a channel and an hour (i.e., date and time) so as to obtain content information of the specified segment of the content information registration space. If the user terminal 4 specifies a channel and an hour directly or indirectly that have no registered content information, a message indicating the absence of content information will be returned.

In order to provide contents through this system, therefore, information providers need to register content information in the content information database 2 as shown in Fig.2.

Business may take such a form that the system for providing contents is operated by a service provider, and information providers pay fees to the service provider to register content information. Such form of business needs a content information registration system by which the information providers submit a request for registering content information in the content information registration space.

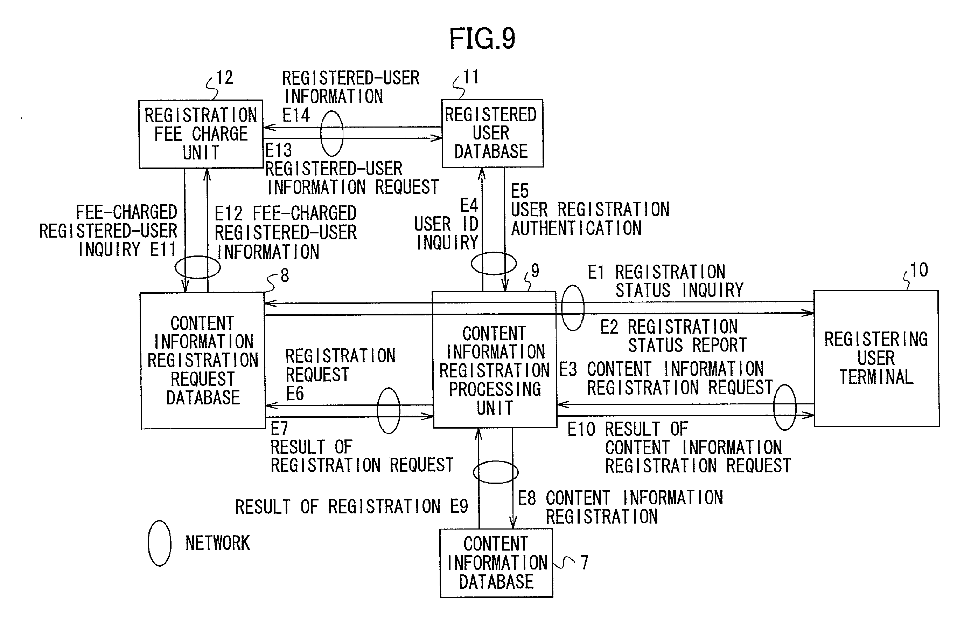

Fig.9 is a block diagram of the content information registration system.

When wishing to register through the content information registration system, an information provider submits a request to the service provider to obtain the right to register content information in a section of the content information registration space specified by a channel and an hour. The request for registration is stored in a content information registration request database 8 of the content information registration system.

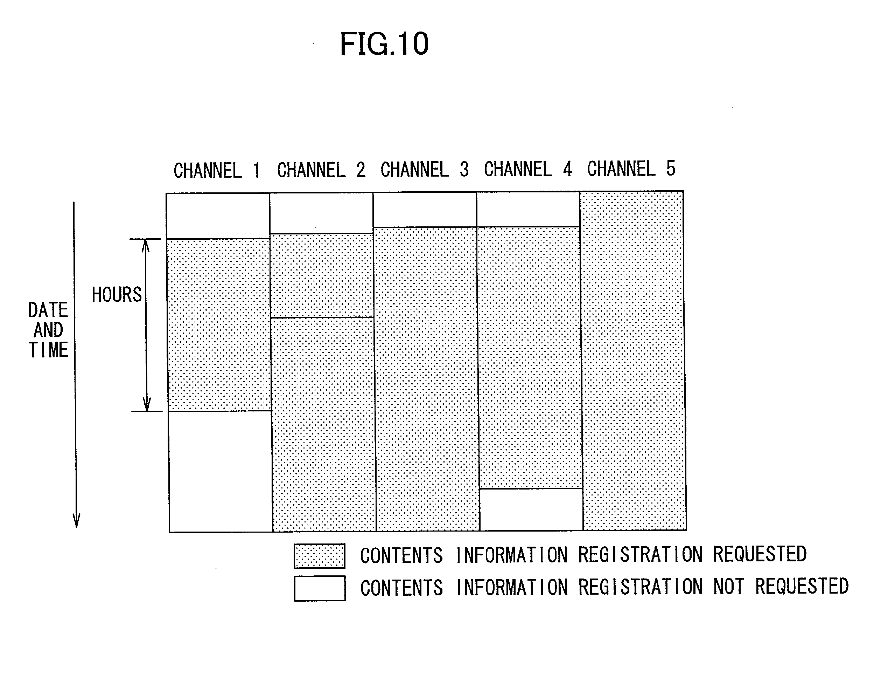

Fig.10 is an illustrative drawing showing a registration request space inside the content information registration request database 8. The registration request space shown in Fig.10 is a data space defined by channels and hours in the same manner as in Fig.2. Information providers obtain portions of the registration request space that are available for registration of content information. Obtaining a portion completes the procedure of submitting a request.

The content information registration request database 8 stores therein the status of registration regarding the database space for storing content information. Such status may indicate which channel and hour sections are registered in a content information database 7. Further, the content information registration request database 8 stores therein information necessary for charging fees to information providers. Such information may include ID information for identifying registered user.

In Fig.9, the content information database 7 may be the same as the content information database 2 shown in Fig.1.

A registering user terminal 10 is used by an information provider to submit a request for registration of content information in the content information database 7, and is also used by the information provider to register the content information. The registering user terminal 10 is implemented based on a personal computer on which network browser is available. A user can submit a request for registration of content information and perform an actual registration process regardless of where the registering user terminal 10 is located on the network.

A content information registration processing unit 9 receives a content information registration status inquiry E1 from the registering user terminal 10, and attends to processing of a registration request and a registration procedure by accessing relevant databases shown in Fig.9. The content information registration processing unit 9 is implemented based on a computer that performs the processing described above by means of software.

The content information registration request database 8 stores therein information regarding content information registration requests in response to a request from the content information registration processing unit 9. Details of such information were previously described.

A registered user database 11 stores therein names, contact addresses (or phone numbers or the like), bank account numbers, registered user IDs, authentication information such as passwords, etc., for registered users who are entitled to request registration. The system and data of the registered user database 11 may be those prepared before the implementation of the content information registration system, and may be provided by utilizing an existing system.

A registration fee charge unit 12 accesses the content information registration request database 8 and the registered user database 11 once in a predetermined time period such as one month, and calculate fees for registration, thereby generation data for charging each registered user. The registration fee charge unit 12 may be implemented based on a computer that performs required processing by means of software.

The databases and units shown in Fig.9 are connected through a network.

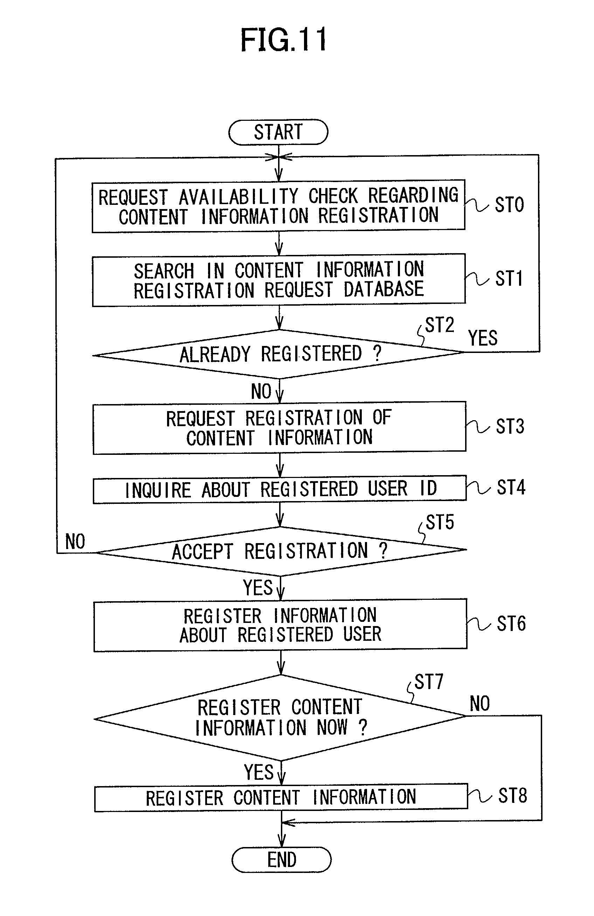

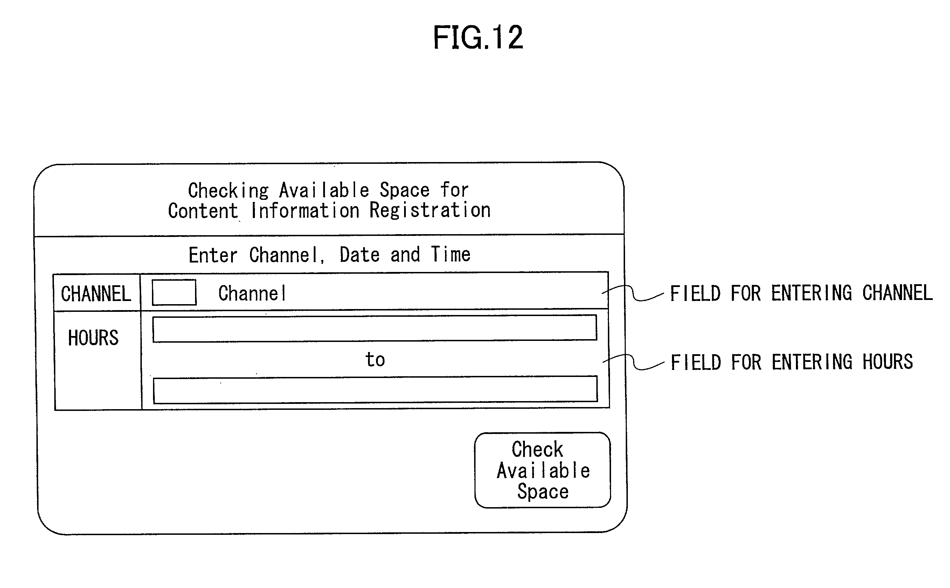

In the following, operations of the content information registration system will be described with reference to Fig.9 through Fig.16. Fig.11 is a flowchart of a process of requesting registration of content information. Fig.12 through Fig.15 are illustrative drawings showing screen displays used for registration request that are shown on the registering user terminal 10 by the content information registration processing unit 9.

A user selects a section of the content information registration space in which the user wishes to register content information. Then, the user uses a screen display of Fig.12 that is shown on the registering user terminal 10 by the content information registration processing unit 9, and inquires about whether a request for content information registration has already been made to the desired section (Fig.11, step ST0).

Fig.12 shows the title of a screen display "Checking Available Space for Content Information Registration" and an instruction message "Enter Channel, Date and Time". Further shown on the screen display are a field for entering a channel, a field for entering date and time, and a button for checking available space.

The user specifies a desired section of the content information registration space by indicating a channel, a starting date and time, and an ending date and time, followed by pressing the button for checking available space. In response, the registering user terminal 10 transmits the content information registration status inquiry E1 to the content information registration processing unit 9.

In response to the inquiry of step ST0, the content information registration processing unit 9 searches in the content information registration request database 8 to check whether a specified section of the registration request space has been taken by a previous request. The content information registration processing unit 9 then transmits a content information registration status report E2 to the registering user terminal 10 (step ST1).

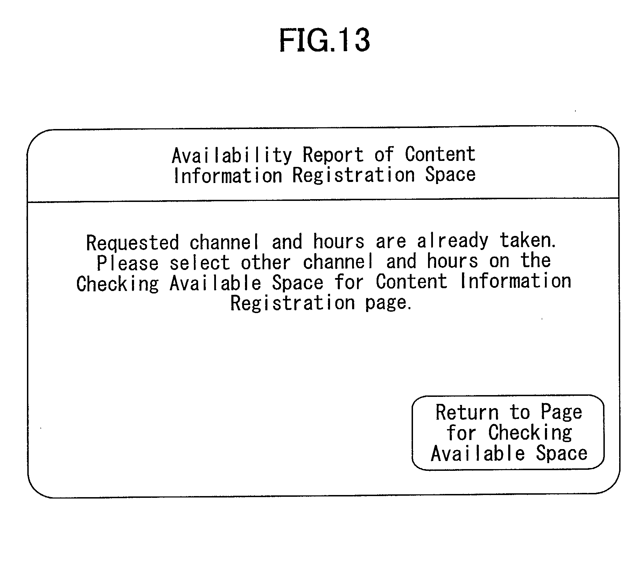

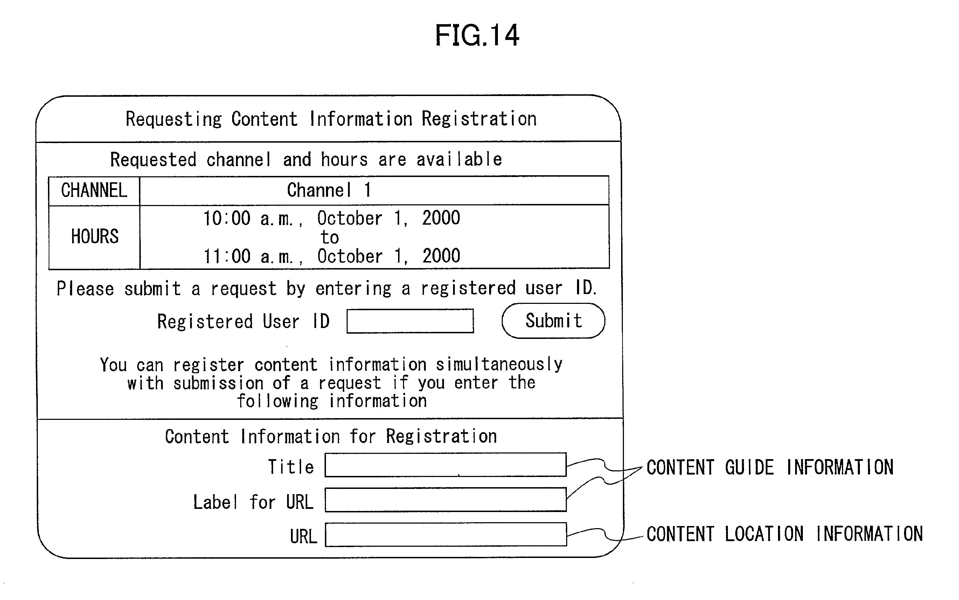

At the registering user terminal 10, a screen display as shown in Fig.13 or Fig.14 is displayed. Based on the displayed information, the user learns whether there is a previous registration (step ST2).

Fig.13 is an illustrative drawing showing an example of a screen display that is presented when a requested section of the content information registration space has already been taken for other registration. Fig.13 shows the title of the display screen (i.e., the title of the page) "Availability Report of Content Information Registration Space" and a message "Requested channel and hours are already taken. Please select other channel and hours on the Checking Available Space for Content Information Registration page." Further, a button for returning to the page for checking available space for content information registration is presented.

Learning from the screen display of Fig.13 that registration cannot be made, the user clicks the button for returning to the checking available space in order to specify another section of the content information registration space. In response, the screen display (page) of Fig.12 will be presented. The user checks another section of the content information registration space to see if it is available (step ST0).

Fig.14 is an illustrative drawing showing an example of a screen display that is presented when a requested section of the content information registration space is available. Fig.14 shows the title of the display screen "Requesting Content Information Registration", a message "Requested channel and hours are available," the available channel "Channel 1", the available date and time "10:00 a.m., October 1, 2000 to 11:00 a.m., October 1, 2000", and a message "Please submit a request by entering a registered user ID". Also shown on this page are a field for entering a registered user ID and a button for submitting a request. The registered user ID is an identifier for authenticating a registered user.

Toward the bottom of the page shown in Fig.14 are provided a message "You can register content information simultaneously with submission of a request if you enter the following information," a heading "Content Information for Registration", and fields for entering a title, a label for URL, and a URL. The title and the label for URL are the content guide information, and the URL is content location information.

Having learnt from the display of Fig.14 that registration can be made, the user submits a request for content information registration with respect to the requested section of the content information registration space (step ST3).

On the page shown in Fig.14, the user enters registered user identification information such as his/her own ID that has been issued beforehand, and clicks the button for submitting a request. The registering user terminal 10 transmits the registered user identification information together with information about the requested section of the content information registration space to the content information registration processing unit 9.

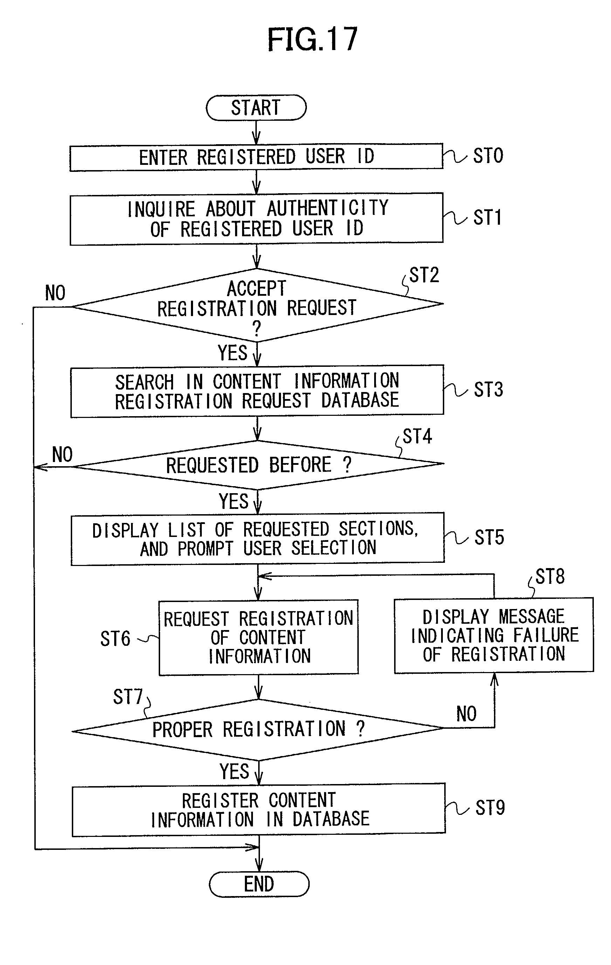

At the bottom of the page shown in Fig.14, content information that is to be registered in the specified section of the content information registration space can be entered. If the content information is not entered, only the registration of the information provider is carried out in this procedure. The registration of content information will be attended to by another procedure (Fig.17).

The content information registration processing unit 9 receives the registered user identification information that was entered at step ST11, and sends a registered user identification inquiry E4 to the registered user database 11 to check whether the user is entitled to registration (step ST4).

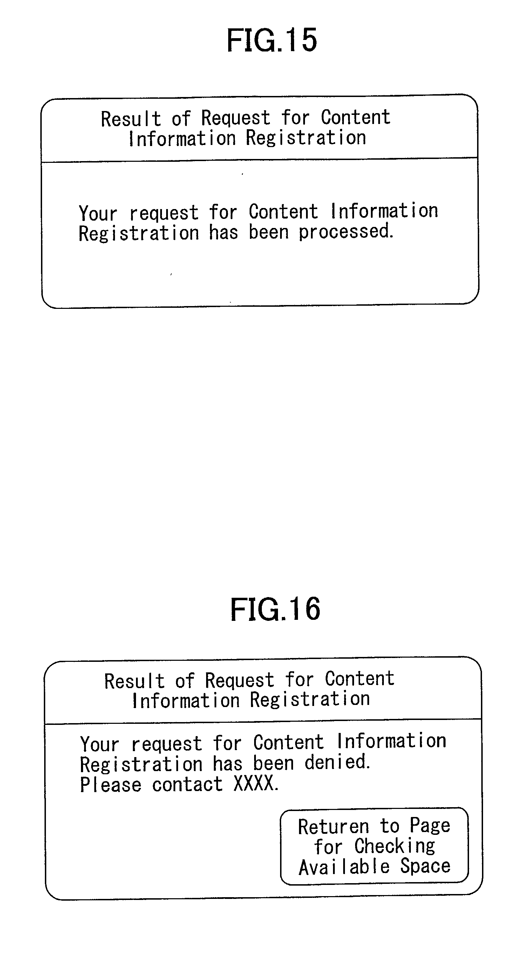

Receiving a user registration authentication E5 from the registered user database 11, the content information registration processing unit 9 decides whether to accept or deny user registration (step ST5). If user registration is to be denied, a page shown in Fig.16 is transmitted to the registering user terminal 10. If the user registration is accepted, the procedure goes to step ST6.

The page shown in Fig.16 presents the title of the page (display screen) "Result of Request for Content Information Registration", a message "Your request for Content Information Registration has been denied. Please contact XXXX," and a button for returning to the page for checking available space.

Having seen the displayed page of Fig.16, the user understands that he/she cannot be registered, so that the user clicks the button for returning to the page for checking available space in order to select another section of the content information registration space. In response, the display page of Fig.12 will be presented. On this page, the user can check availability of space with respect to another section of the content information registration space (step ST0).

If the content information registration processing unit 9 accepts the request for user registration, the content information registration processing unit 9 registers a pair of the registered user ID number and information about the specified section of the content information registration space in the content information registration request database 8 (step ST6).

Further, the content information registration processing unit 9 checks whether content information has been entered on the displayed page of Fig.14 (step ST7). If content information has not been entered, a message as shown in Fig.15 will be presented to indicate that the request for registration has been processed. With this, the procedure comes to an end. If content information has been entered, on the other hand, the procedure proceeds to step ST8.

At step ST8, the content information registration processing unit 9 registers the provided content information in the content information database 7 as the content information was provided together with the request for registration. Thereafter, the content information registration processing unit 9 presents a message indicative of completion of processing for registration. With this, the procedure for requesting content information registration comes to an end.

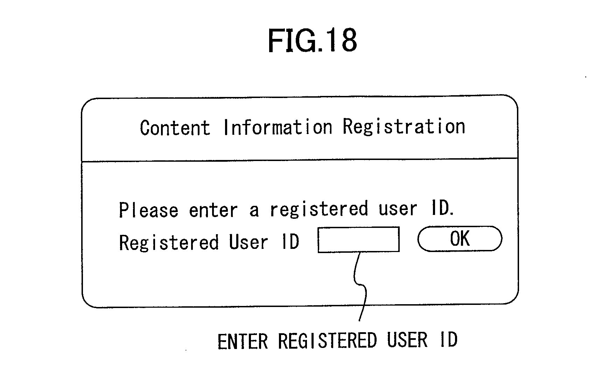

In the following, a description will be given with respect to an operation for registering content information in the content information database 7 when a registered user already has an allocated section of the content information registration space. Fig.17 is a flowchart of a process for registering content information in the content information database 7. Fig.18 through Fig.24 are illustrative drawings showing examples of displayed pages for registering content information that are displayed on the registering user terminal 10 by the content information registration processing unit 9.

The content information registration processing unit 9 presents a display screen for content information registration as shown in Fig.18 on the registering user terminal 10 in response to a request made by the registering user terminal 10, thereby entering into a state for waiting for the entry of a registered user ID. Fig.18 shows the title of the page "Content Information Registration", a message "Please enter a registered user ID," and a field for entering a registered user ID. On the page shown in Fig.18, the user enters his/her registered user ID (step ST0).

The content information registration processing unit 9 sends a registered user identification inquiry E4 to the registered user database 11 to check the authentication of the registered user ID (step ST1). The content information registration processing unit 9 then decides whether to accept or deny the registration request based on the user registration authentication E5 sent from the registered user database 11 (step ST2).

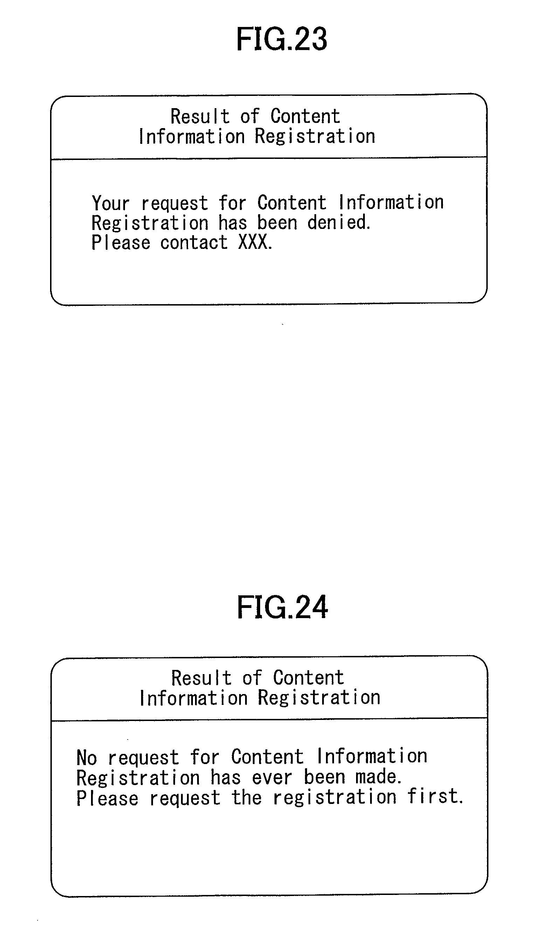

If the registration request is denied, the content information registration processing unit 9 presents a page as shown in Fig.23, and brings the procedure to an end. If the registration request is accepted, on the other hand, the procedure goes to a step ST3. The page shown in Fig.23 presents the title "Result of Content Information Registration" and a message "Your request for Content Information Registration has been denied. Please contact XXX."

If the registration request is accepted, the content information registration processing unit 9 searches in the content information registration request database 8 (step ST3), and checks whether there is a request that was made under the registered user ID that has just been entered (step ST4).

If no request was ever made, a display screen (page) of Fig.24 is presented on the registering user terminal 10, and the procedure comes to an end. The page of Fig.24 shows the title "Result of Content Information Registration" and a message "No request for Content Information Registration has ever been made. Please request the registration first."

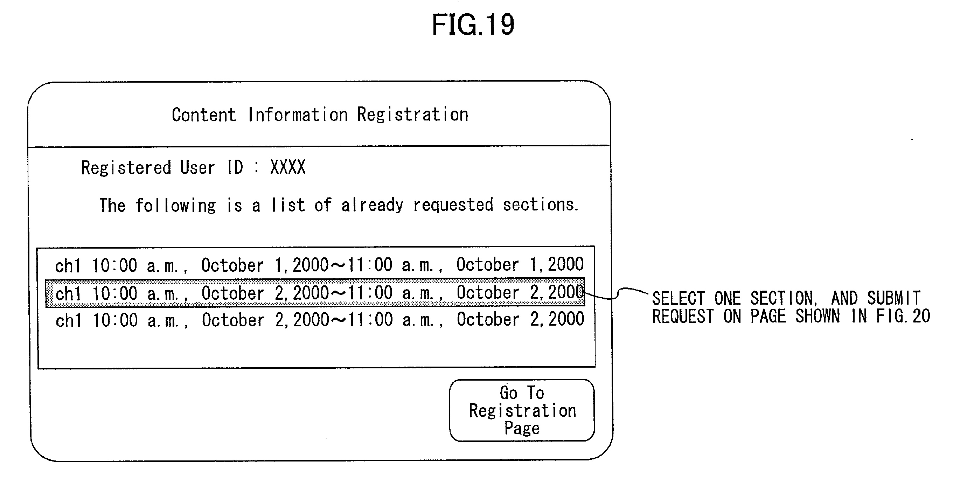

If a request was made before, the sections of the content information registration space that were found at step ST3 as being requested by the same registered user ID are presented as shown in Fig.19 to the user, thereby prompting a user to make selection (step ST5). Fig.19 shows the title "Content Information Registration", the registered user ID "XXXX", a message "The following is a list of already requested sections," a list of the sections of the content information registration space that were requested by the user, and a button for proceeding to a page for registration.

The user selects one of the listed sections of the content information registration space on the page of Fig.19, and clicks the button for proceeding to the page for registration. In response, the content information registration processing unit 9 presents a registration page of Fgi.20 on the registering user terminal 10, thereby prompting a content registration request to be entered (step ST6).

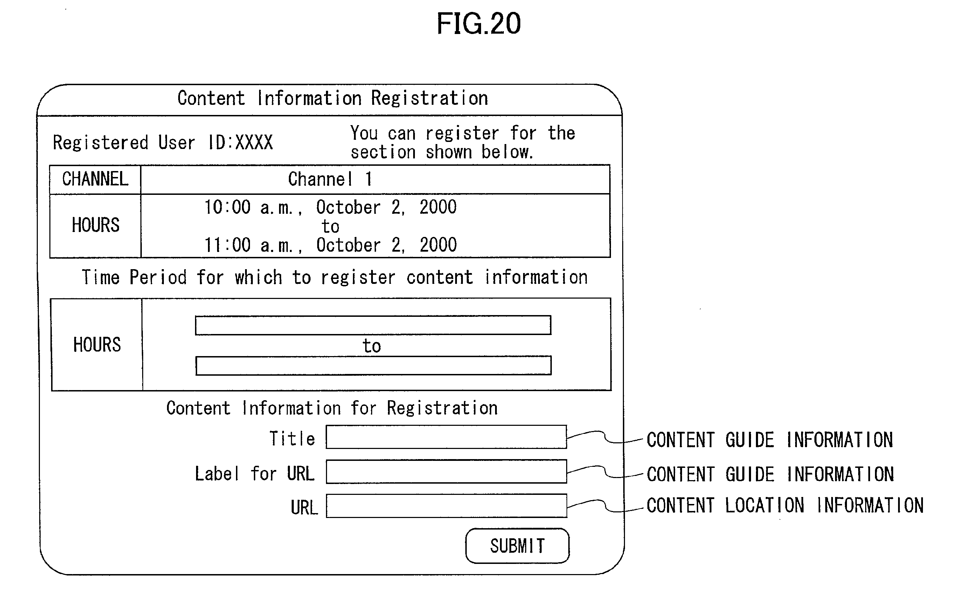

The display screen (page) of Fig.20 shows the title "Content Information Registration", the registered user ID "XXXX", a message "You can register for the section shown below," the channel of the section "Channel 1", the hours of the section "10:00 a.m., October 2, 2000 to 11:00 a.m., October 2, 2000", a field for specifying hours for which to register content information, a message "Content Information for Registration", a field for entering a title, a field for entering a URL label, a field for entering a URL, and a button for registration. The title and the URL label together make up the content guide information, and the URL constitutes the content location information.

On the registration page shown in Fig.20, the date and time "10:00 a.m., October 2, 2000 to 11:00 a.m., October 2, 2000" is the section for registration that was selected at step ST5 on the selection page shown in Fig.19.

On the registration page of Fig.20, the user specifies a time range that is included within the range "10:00 a.m., October 2, 2000 to 11:00 a.m., October 2, 2000" by entering time designations in the field for specifying hours for which to register content information. Further, the user enters content information at the bottom of the page, followed by pressing the button for registration, thereby requesting the registration of content information in the content information database 7 (step ST6).

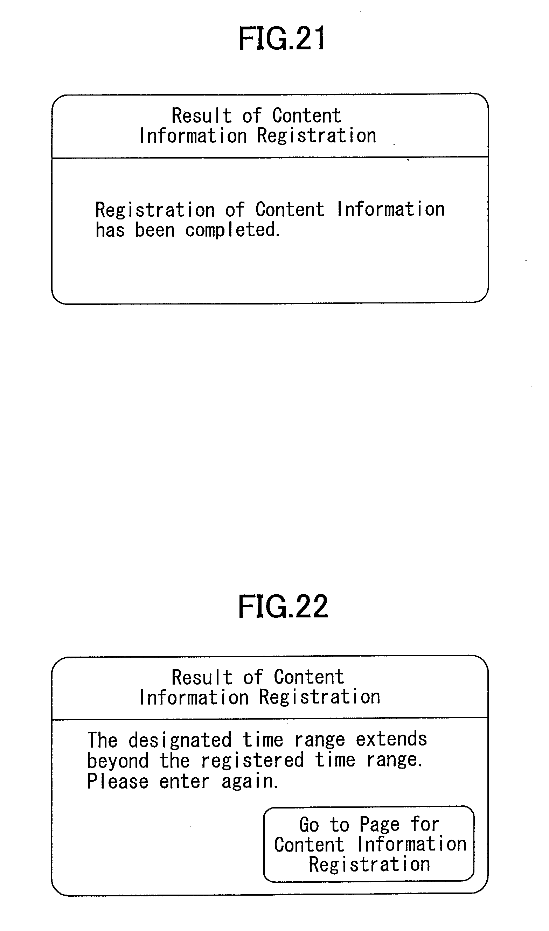

The content information registration processing unit 9 checks whether the time range specified by the entered time designations falls within the segment of the content information registration space selected at step ST5 (step ST7). If the specified time range does not fall within the selected segment, a display screen (page) shown in Fig.22 will be presented on the registering user terminal 10 (step ST8).

Fig.22 shows the title "Result of Content Information Registration", a message "The designated time range extends beyond the registered time range. Please enter again," and a button for proceeding to the page for content information registration.

When the user clicks the button for proceeding to the page for content information registration on the displayed page of Fig.22, the content information registration processing unit 9 presents the registration page of Fig.20 again, and the procedure goes back to step ST23. The content information registration processing unit 9 makes the procedure proceed to step ST9 if the time range specified at step ST6 falls within the section of the content information registration space selected at step ST5.

At step ST9, the content information registration processing unit 9 registers in the content information database 7 the content information entered on the displayed page of Fig.20 with respect to the selected channel and hours. Then, the content information registration processing unit 9 displays a page as shown in Fig.21, and brings the procedure to an end. The display screen of Fig.21 shows the title "Result of Content Information Registration" and a message "Registration of Content Information has been completed."

The content information registration system as shown in Fig.9 is aimed at preparing content information, which is different from contents provided by conventional content providing servers.

In this embodiment, an existing configuration based on Web servers for providing conventional contents is utilized as it is, and the content information registration system of Fig.9 is added to the existing configuration to provide the content information database, so that the content providing system of Fig.1 provides users with an access means that is new and easy to use.

Since the provision of contents by conventional Internet configuration continues to be offered while adding the system of the present embodiment, an increase in the number of content users can be expected.

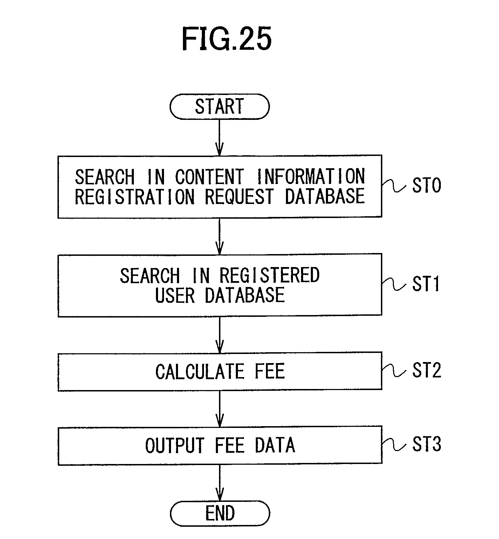

In association with the content information registration system as described above, fee collection can be made as part of the business to collect fees from the information providers who have registered content information. Fig.25 is a flowchart of a process of determining the amount of fees charged for content information registration. This flow shows the collection of fees that is performed at predetermined intervals such as monthly, separately from the processing of Fig.11 and Fig.17.

The registration fee charge unit 12 issues a fee-charged registered user inquiry E11 to the content information registration request database 8, and receives fee-charged registered-user information E12 that provides information about the registered hours that incur fees (step ST0).

The registration fee charge unit 12 extracts a registered user ID with respect to each fee-charged registration, and searches in the registered user database 11 by issuing a registered user information request E13 that includes the registered users ID. As a result, the registration fee charge unit 12 receives registered user information E14 indicative of fee schedules that are selected by respective registered users and are necessary for the determination of fees to be charged (step ST1).

The registration fee charge unit 12 calculates fees to be charged to respective registered users based on information obtained at step ST0 and ST1 by taking into account registered channels, registered hours, and user-selected fee schedules.

In order to calculate fees, a registration fee for a content information space for 30 minutes per channel may be defined as XXX yen for hours from 9:00 to 12:00, YYY yen for hours from 12:00 to 16:00, and so on, and the total amount of fees for the current month for all the sections of the content information space registered by a given registered user may be obtained on the half-an-hour basis.

The registration fee charge unit 12 outputs the fee data as printouts or to other account clearance systems (step ST3).

In this manner, the service provider who runs the content information registration system according to the present embodiment can sell sections of content information registration spaces on a channel-and-hour-specific basis so as to collect registration fees for the registration of content information.

A conventional means of presenting advertisements on the Internet is to put up banners on Web pages, and spaces on Web pages are a typical item to be sold. In the content providing system of the present embodiment, spaces in the channel-and-time space that are easily specified by the user-friendly interface are an item to be sold. Since this form of sales items bears a close resemblance to the program hours offered for sale in the broadcasting business, advertisement spaces associated in a time-specific manner with broadcast programs can be effectively offered for sale.

Content providers pay registration fees to the service provider to register content information, thereby attracting a large number of users by using the service system of the present invention when wishing users to access Web contents associated with specified hours.

In this manner, the system of the present invention can be used for a wide variety of contents such as program information or advertisement information associated with broadcast hours of programs, Internet events associated with time-specific events, etc.

Further, the present invention is not limited to these embodiments, but various variations and modifications may be made without departing from the scope of the present invention.

The present application is based on Japanese priority application No. 2000-383749 filed on December 18, 2000, with the Japanese Patent Office, the entire contents of which are hereby incorporated by reference.

## Claims

1. A system, comprising:
a content information database which stores therein content information about contents associated with broadcast programs on a channel-and-time-specific basis that corresponds to a channel and a time of each broadcast program, said content information including at least one of content guide information descriptive of the contents and content location information indicative of locations of the contents on a network; and
a content selecting unit which searches in said content information database for the content information of a specific channel and a specific time in response to a request from a user terminal indicating at least one of the specific channel and the specific time in a direct or indirect manner, and provides the content information of the specific channel and the specific time to the user terminal.

2. The system as claimed in claim 1, further comprising a content providing server which provides the user terminal with the contents that correspond to the content information of the specific channel and the specific time.

3. The system as claimed in claim 2, wherein the contents provided to the user terminal are identified by the content location information.

4. The system as claimed in claim 1, further comprising a time marking unit which indicates a time of a present instant, wherein said content selecting unit searches in said content information database for the content information of the specific channel specified by the request from the user terminal and the specific time indicated by said time marking unit.

5. The system as claimed in claim 1, wherein the specific channel and the specific time are stored as a current setting, and said content selecting unit searches in said content information database for the content information of the specific time of the current setting and a channel indicated by a request from the user terminal indicating a relative change from the specific channel of the current setting.

6. The system as claimed in claim 1, wherein the specific channel and the specific time are stored as a current setting, and said content selecting unit searches in said content information database for the content information of the specific channel of the current setting and a time indicated by a request from the user terminal indicating a relative change from the specific time of the current setting.

7. The system as claimed in claim 1, further comprising a content-selection user interface which communicates with the user terminal, and has buttons thereon for selecting channels, wherein pressing of one of the buttons results in the user terminal sending the request to the content selecting unit.

8. The system as claimed in claim 1, wherein said content-selection user interface has a button thereon for indicating a relative shift from a current time setting.

9. The system as claimed in claim 1, wherein said content-selection user interface has a button thereon for indicating a relative shift from a current channel setting.

10. A method of providing contents, comprising the steps of:
providing a content information database which stores therein content information about contents associated with broadcast programs on a channel-and-time-specific basis that corresponds to a channel and a time of each broadcast program, said content information including at least one of content guide information descriptive of the contents and content location information indicative of locations of the contents on a network;
searching in said content information database for the content information of a specific channel and a specific time in response to a request from a user terminal indicating at least one of the specific channel and the specific time in a direct or indirect manner; and
providing the user terminal with the contents that correspond to the content information of the specific channel and the specific time.

11. The method as claimed in claim 10, wherein said step of providing the user terminal with the contents identifies the contents by the content location information that is included in the content information of the specific channel and the specific time.

12. A system for registering content information, comprising:
a content information database which stores therein content information about contents associated with broadcast programs on a channel-and-time-specific basis that corresponds to a channel and a time of each broadcast program;
a registration request database which stores therein information about availability of sections in said content information database for registration of the content information, and further stores therein user IDs associated with the sections, said user IDs identifying users who has been registered for use of the sections associated with the user IDs; and
a registration processing unit which searches in said registration request database to check whether a section of a specific channel and a specific time is available in response to a status inquiry from a user terminal indicating the specific channel and the specific time, and provides a result of the check to the user terminal.

13. The system as claimed in claim 12, further comprising a registered user database which stores therein the user IDs of users entitled to register the content information in said content information database, wherein said registration processing unit searches in said registered user database for a user ID of a user in response to a registration request indicating the user ID that is sent from the user terminal in response to the result of the check, and accepts the registration request in response to finding of the user ID in said registered user database.

14. The system as claimed in claim 13, wherein said registration processing unit stores information in said registration request database upon the acceptance of the registration request to indicate that the section of the specific channel and the specific time is allocated to the user of said user ID.

15. The system as claimed in claim 13, wherein said registration processing unit stores content information in said content information database with respect to the section of the specific channel and the specific time.

16. The system as claimed in claim 15, wherein said registration processing unit stores content information in said content information database that is provided concurrently with the registration request.

17. A method of registering a section for content information, comprising the steps of:
providing a content information database which stores therein content information about contents associated with broadcast programs on a channel-and-time-specific basis that corresponds to a channel and a time of each broadcast program;
providing a registration request database which stores therein information about availability of sections in said content information database for registration of the content information, and further stores therein user IDs associated with the sections, said user IDs identifying users who has been registered for use of the sections associated with the user IDs;
searching in said registration request database to check whether a section of a specific channel and a specific time is available in response to a status inquiry from a user terminal indicating the specific channel and the specific time;
providing a result of the check to the user terminal; and
storing information in the registration request database to indicate that the section of the specific channel and the specific time is allocated to a user of a user ID in response to a registration request indicating the user ID that is sent from the user terminal in response to the result of the check.

18. A method of registering a section for content information, comprising the steps of:
providing a content information database which stores therein content information about contents associated with broadcast programs on a channel-and-time-specific basis that corresponds to a channel and a time of each broadcast program;
providing a registration request database which stores therein information about availability of sections in said content information database for registration of the content information, and further stores therein user IDs associated with the sections, said user IDs identifying users who has been registered for use of the sections associated with the user IDs;
searching in said registration request database for at least one section that is registered for a user of a user ID in response to a request from a user terminal indicating the user ID;
providing a search result indicative of said at least one section to the user terminal if said at least one section is found as a result of the search; and
storing content information in the content information database with respect to a section of a specific channel and a specific time falling within said at least one section in response to a registration request that is sent from the user terminal in response to the search result.

19. A system for calculating registration fees, comprising:
a content information database which stores therein content information about contents associated with broadcast programs on a channel-and-time-specific basis that corresponds to a channel and a time of each broadcast program;
a registration request database which stores therein information about availability of sections in said content information database for registration of the content information, and further stores therein user IDs associated with the sections, said user IDs identifying users who has been registered for use of the sections associated with the user IDs; and
a registration fee charge unit which determines an amount of fees to be charged to the users who are registered in said registration request database for use of the sections in said content information database.

20. The system as claimed in claim 19, further comprising a registered user database which stores therein user IDs and fees schedules associated therewith, wherein said registration fee charge unit refers to said registered user database to check the fee schedules of the users so as to determine an amount of fees to be charged to the users.

21. A method of calculating registration fees, comprising:
providing a content information database which stores therein content information about contents associated with broadcast programs on a channel-and-time-specific basis that corresponds to a channel and a time of each broadcast program;
providing a registration request database which stores therein information about availability of sections in said content information database for registration of the content information, and further stores therein user IDs associated with the sections, said user IDs identifying users who has been registered for use of the sections associated with the user IDs; and
determining an amount of fees to be charged to the users who are registered in said registration request database for use of the sections in said content information database.

22. A method of using an apparatus for indicating a broadcast channel of user preference by pressing one of buttons for selecting respective broadcast channels, comprising the steps of:
pressing one of the buttons to request a content associated with a broadcast program of a corresponding channel,
sending signals indicative of the pressing of one of the buttons from said apparatus to a computer connected to a network; and
receiving the content by the computer through the network.

23. A database, comprising content information about contents associated with broadcast programs on a channel-and-time-specific basis that corresponds to a channel and a time of each broadcast program, said content information including at least one of content guide information descriptive of the contents and content location information indicative of locations of the contents on a network.
